# EUROPEAN PATENT APPLICATION

(11) **EP 0 749 684 A1**
(43) Date of publication of application: **27.12.1996**
(21) Application number: 95201701.0
(22) Date of filing: 22.06.1995
(51) Int. Cl.: A01K 1/015

(54) **Dung grid for the floor of a cattle shed and cattle shed comprising such dung grids**

(71) Applicant: TOLSMA TECHNIEK B.V., NL-8304 AT Emmeloord (NL)
(72) Inventor: Tolsma, Pieter Sjoerd, 8304 AT Emmeloord (NL); Tolsma, Cornelis Marten, 8304 AT Emmeloord (NL)
(74) Representative: Smulders, Theodorus A.H.J., Ir.

(57) **Abstract**

The invention relates to a dung grid (12) for the floor (6) of a cattle shed (1). The grid comprises a number of parallel elongated floor sections (74), spaced apart with some interspace, which in combination form a floor surface of the grid (12). A floor section (74) comprises an upper surface, a lower surface and side walls. The upper surface of the floor section is wider than a lower surface of that floor section (74). The invention also relates to a cattle shed (4) comprising a floor having at least one opening which is covered with at least one such dung grid (12).

## Description

The invention relates to a dung grid for the floor of a cattle shed, comprising a number of parallel, elongated floor sections, spaced apart with some interspace, which in combination form at least a part of a floor surface of the grid and each comprise an upper surface, a lower surface and two upright side walls. The invention also relates to a cattle shed comprising a floor having at least one opening which is covered with at least one dung grid.

Such dung grids, which are known per se, comprise floor sections of rectangular cross section. This entails a problem in that the solid excrements of the animals often stick between the floor sections and therefore are not discharged to a space under the floor of the shed. Because the excrements are rather moist, it takes a long time for the excrements left between the floor sections to dry and subsequently fall down. This problem arises in particular near a separation in the shed, such as a shed wall, a partition or a gate, because that is precisely where the animals prefer to deposit their excrements.

The invention provides a solution to this problem and is characterized in that the upper surface in a direction transverse to the longitudinal direction of the upper surface is wider than the lower surface.

What is thus achieved is that the width of the gap between two upper surfaces of two adjacent floor sections is less than the width of the gap between the lower surfaces of these floor sections. Excrements which are being treaded between the floor sections by the cattle can then easily fall down between the lower surfaces.

In particular, the width of a cross section of the floor section decreases in size in the direction from the upper surface to the lower surface, so that there is little chance of the excrements sticking between the floor sections.

According to a particular embodiment, the grid is designed to allow liquid to flow through a number of floor sections for the purpose of heating the dung grid. What is thus achieved is that the chances of excrements still sticking between floor sections are further reduced in that the excrements are heated, dry as a result, and pulverize at least partly and fall down.

In particular, the floor sections in combination form a rectangular surface whose width is less than a corresponding largest width of the dung grid, and whose length is less than a corresponding largest length of the dung grid. Preferably, the dung grid accordingly comprises on three longitudinal sides thereof an opening or gap extending along these sides. As a result, in use - that is, when a number of dung grids are arranged adjacent to each other above an opening in the floor of the shed - a slot is formed along at least three longitudinal sides of the dung grid. The dung grid can be utilized in a shed in such a manner that these slots are respectively located adjacent. This has as an advantage that excrements which the animals by habit deposit adjacent a shed wall or a gate of the shed can fall down into the space under the dung grid without touching the grid.

The invention will be further explained with reference to the drawings. In the drawings:
Fig. 1 is a diagrammatic plan of a cattle shed comprising dung grids according to the invention;
Fig. 2 is a section of the shed taken along the line II-II of Fig. 1;
Fig. 3 is a section of the shed taken along the line III-III of Fig. 1;
Fig. 4 is a longitudinal section of a part of a first embodiment of the conveying apparatus of Fig. 2;
Fig. 5 is a section of the shed taken along the line V-V of Fig. 1;
Fig. 6 is a cross section of a second embodiment of the conveying apparatus of Fig. 2;
Fig. 7 is a top plan view of an embodiment of a dung grid according to the invention;
Fig. 8 is a cross section of the dung grid taken on the line VIII-VIII of Fig. 7;
Fig. 9 is a cross section of the dung grid taken on the line IX-IX of Fig. 7;
Fig. 10 is a cross section of a floor section of a dung grid according to Fig. 7;
Fig. 11 is a cross section of a first tubular section of a dung grid according to Fig. 7; and
Fig. 12 shows a top plan view of a distributor arranged in the first tubular section.

In the following figures, like parts have been provided with the same reference numerals. Reference numeral 1 designates a shed with a climate control system 2. The shed 1 comprises a space 3 where the cattle 4 are accommodated. In the accommodation space 3, the floor 6 of the shed comprises a first portion 8 which consists of a closed concrete floor and a second portion 10 which is provided with dung grids 12 which provide an open communication between the accommodation space 3 and a discharge space 13 located under the floor 6. The cattle 4, in this case pigs, are accommodated on the first and second portions 8, 10 of the floor 6. The accommodation space is subdivided into bedding spaces 14 for the cattle by means of inner partitions 15. The bedding spaces 14 are further bounded by a shed wall 16. The first floor portion 8 functions as bedding for the cattle while the second portion functions as manure location. The climate control system 2 further comprises a discharge path 17, located under the floor 6 of the shed, for discharging liquid and solid excrements of the cattle. These excrements are deposited on the dung grids 12 by the cattle and can fall down into the discharge space 13 through apertures in the grids.

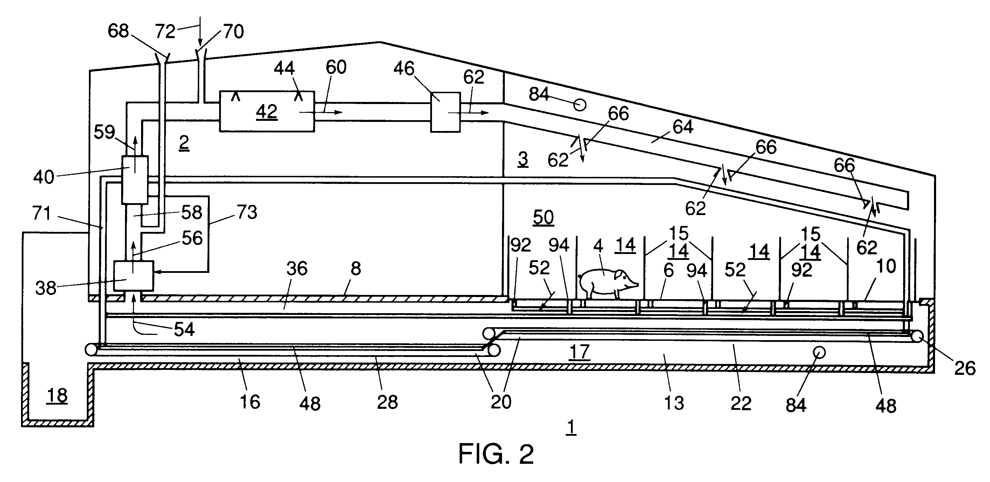

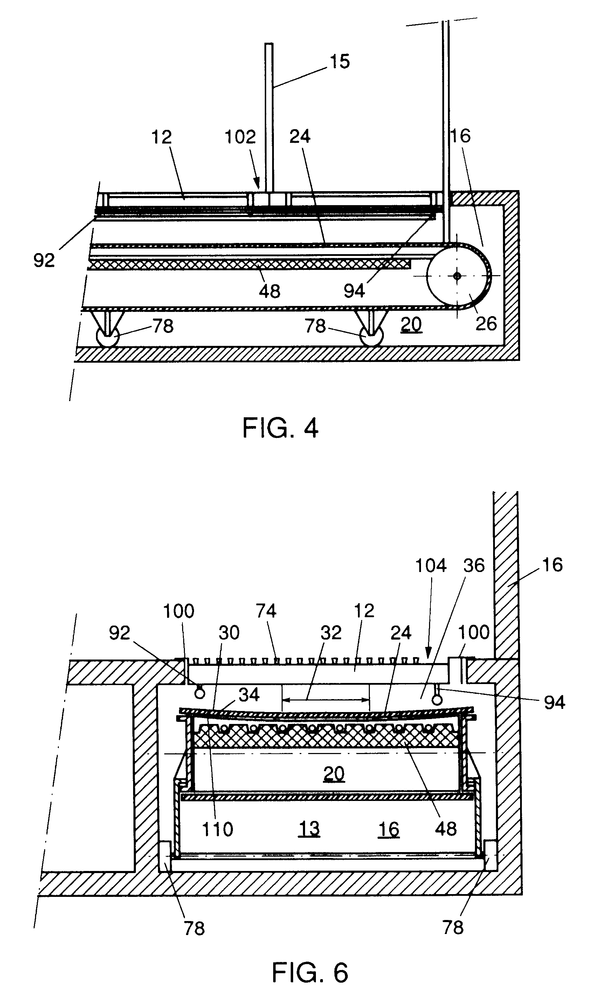

The discharge path 17 begins under the second portion 10 of the floor 6 and terminates in a collecting space 18 for the excrements, the collecting space being located outside the accommodation space 3. The discharge path 16 comprises a transport system 20 which in this case comprises a first conveyor belt unit 22 with a conveyor 24 whose upper run moves to the left in Fig. 2 in the direction of the reservoir. To that end, the endless conveyor 24 is provided with two reversing means 26. The transport system 20 further comprises a second conveyor belt unit 28 which in this case is arranged lower than the first conveyor belt unit 22 and partly overlaps the first conveyor belt unit. The second conveyor belt unit 28 is otherwise identical to the first conveyor belt unit 22 and moreover is driven in the same direction. On their transport side, conveyors 24 of the first and second conveyor belt units 22, 28 are provided with a concave surface 30. The conveyor 24 is thus provided with a collecting area indicated in Fig. 6 by arrow 32. The collecting area 32 is bounded on either side by a surface 34 sloping in the transverse direction of the conveyor and extending in the lengthwise direction of the conveyor.

Preferably, the climate control system 2 further comprises a return flow path 36, which includes a biofilter 38, a cooler 40, a space 42 with UV lamps 44 and a fan 46. The fan 46 blows air into the accommodation space 3. The flow of air in the climate control system 2 is indicated in the drawings by means of arrows. In addition, the climate control system 2 may further comprise a heating device 48 which in this case is located under the top run of the conveyor 24 in both the first and the second conveyor belt unit 22, 28.

The liquid and solid excrements end up on the second portion 10 of the floor 6. The cattle will tread these excrements through the dung grid 12 of the second floor portion 10. The excrements then fall onto the conveyor 24 of the first conveyor belt unit 22. By virtue of the transport surface 30 of the conveyor being of concave design, the liquid excrements will flow directly along the sloping surface 34 to the collecting area 32. As a result, the liquid and solid excrements are separated from each other without mixing with each other. What is thus prevented is that at least substantially no aggressive gases such as ammonia will be released into the accommodation space 3.

The transport system 20 will convey the at least substantially separated solid and liquid excrements via conveyor belt units 22, 28 in the direction of the collecting space 18.

By the time the excrements are delivered into the collecting space 18 by the transport system 20, they will have dried at least substantially. A first possibility of achieving this is to sufficiently amply dimension the time during which the excrements are disposed on the transport system on the basis of the length of the discharge path and/or the conveying speed of the transport system. It is also possible to vary the conveying speed or to temporarily reduce it to zero to allow the excrements to dry properly.

The air 50 from the accommodation space 3 is passed via the return flow path 36 to the biofilter 38. This air 50 will at least substantially be free of aggressive gases because the release thereof has been prevented in accordance with one aspect of the invention. Insofar as any aggressive gases have yet been released, they will be extracted.

It is observed that the return flow path 36 and the discharge path 16 coincide at least partly. As a consequence, spent air will flow along the excrements disposed on the transport system 20. This air 52 will further promote and thereby accelerate the drying of the excrements. The result of all this is that the required retention time on the transport system 20 can be limited, while the excrements reach the collecting space 18 at least substantially in dried form.

The air 54 is fed to the biofilter 38 and will have a high relative humidity due to the moisture abstracted from the excrements. The biofilter 38 can be of any generally known type and comprises means for removing aggressive substances, which will be present only in a very minor amount, from the spent air 54. The air 56 which has passed through the biofilter 38 is thereafter passed via channel section 58 of the return flow path 36 to the cooler 40. In channel section 58 of the return flow path 36, the air 56 no longer contains any aggressive gases.

Since the cattle 4 produce a considerable amount of heat, the spent air 52 will preferably have to be cooled before being returned to the accommodation space 3. If this is not done, the temperature of the accommodation space 3 will rise continuously since the shed 1 is of airtight construction. The temperature of the discharged air 52, i.e., the temperature of the air 50 in the accommodation space 3, will typically be 18 to 20 degrees Centigrade. The cooler 40 cools the air to, for instance, 10 to 14 degrees Centigrade. The thus cooled air 59 flows to space 42 where the light of the UV lamps 44 kills the microorganisms, if any, present in the air 59. Under the influence of the UV lamps, the temperature of the air flowing through the space 42 will rise again slightly, for instance 1 to 2 degrees. The air 60 leaving the space 40 has a temperature lower than the temperature of the accommodation space 3. Moreover, the air 60 is free of aggressive gases and microorganisms and may accordingly be qualified here as fresh air. The fan 46 blows this fresh air 62 into the accommodation space 3 via a pipe 64 with outlet openings 66. This pipe ensures a proportionate distribution of the fresh air in the accommodation space 3.

The return flow path 36 further comprises an exterior outlet 68, whereby a percentage of air 52 discharged from the accommodation space 3 is fed to the atmosphere and an inlet 70 whereby at least substantially the same amount of outside air 72 is fed to the return flow path. This outlet 68 is located downstream of the biofilter 38, so that only air 56 which is free of aggressive gases is discharged into the atmosphere. The outlet is preferably located between the biofilter 38 and the cooler 40, so that warm, not yet cooled air is discharged. The inlet 70 is located downstream of the outlet 68. In this exemplary embodiment, the space 42 is provided with the inlet 70, so that microorganisms, if any, present in the outside air are also killed.

As is clearly indicated in Figs. 4 and 6, the first conveyor belt unit 22 can be provided with wheels 78, so that the entire conveyor belt unit can easily be moved. The concave surface 30 may be formed in the conveyor 24 itself. In that case, the conveyor can be entirely free between the reversing means 26, as shown in Fig. 4. It is also possible, however, to tension the conveyor along a bearing part 110 with a concave surface, so that the conveyor assumes the form of this bearing part, see also Fig. 6.

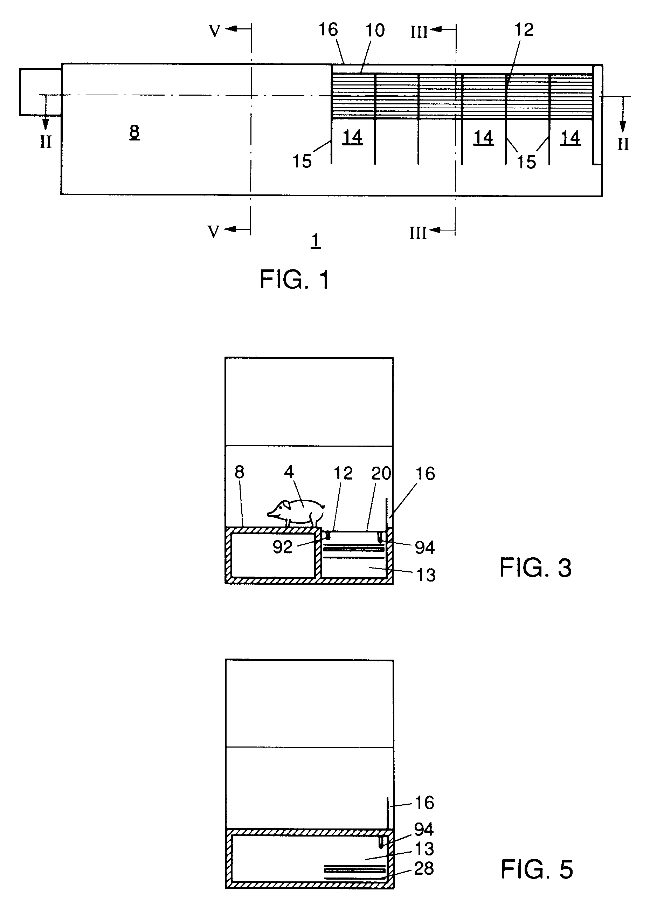

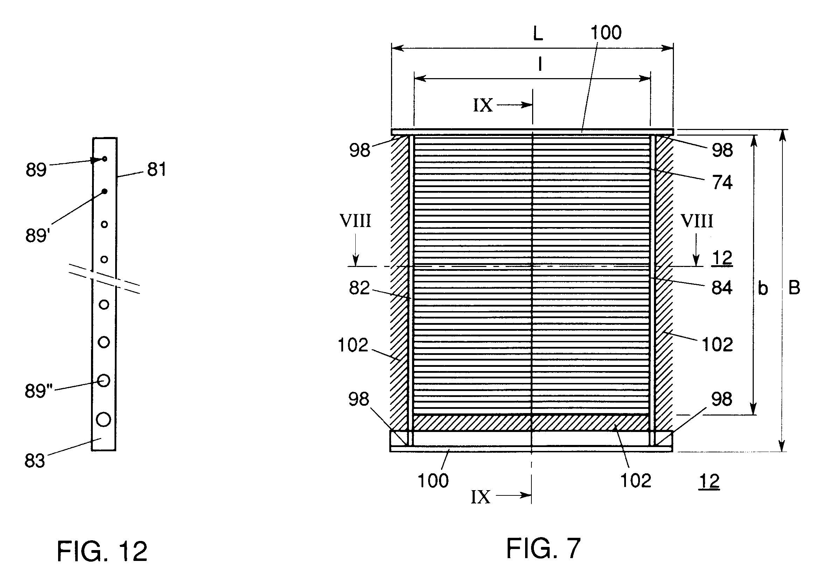

Fig. 1 shows six individual spaces 14, each comprising a dung grid 12, in accordance with the invention. Figs. 7-10 show a possible embodiment of a dung grid 12 according to the invention for use in a bedding space 14. The dung grid comprises a number of parallel elongated floor sections 74, spaced apart with some interspace, which in combination form a floor surface of the grid. A floor section 74 comprises an upper surface 76 and a lower surface 78 which are interconnected by means of side walls 80. The upper surface 76 of the floor section 74 is wider than the lower surface 78 of the floor section 74.

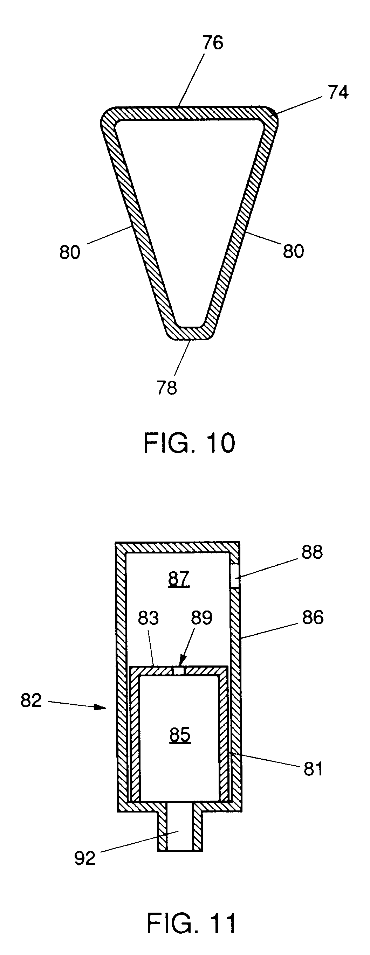

In this example the width of a cross section of the floor section 74 decreases in size in the direction from the upper surface to the lower surface (see Fig. 10). As shown in the present exemplary embodiment, both side walls 80 of the floor section 74 include a non-right angle with the upper surface 76 and the lower surface 78. Preferably, a cross section of the floor section 74 is trapezoidal, as shown in Fig. 10.

The dung grid further comprises a first and a second tubular section 82, 84. Each tubular section 82, 84 comprises a side wall 86 with openings 88, in which the free ends of the floor sections 74 are disposed. The first hollow tubular section 82 further comprises an inlet opening 92 for supplying heating liquid to the interior of the first tubular section and the second hollow tubular section 84 comprises an outlet opening 94 for discharging heating liquid from the interior of the second tubular section, which heating liquid has flowed via and through the floor sections 74, from the first tubular section 82 to the second tubular section 84. In this way the floor sections 74 of the dung grid can be heated.

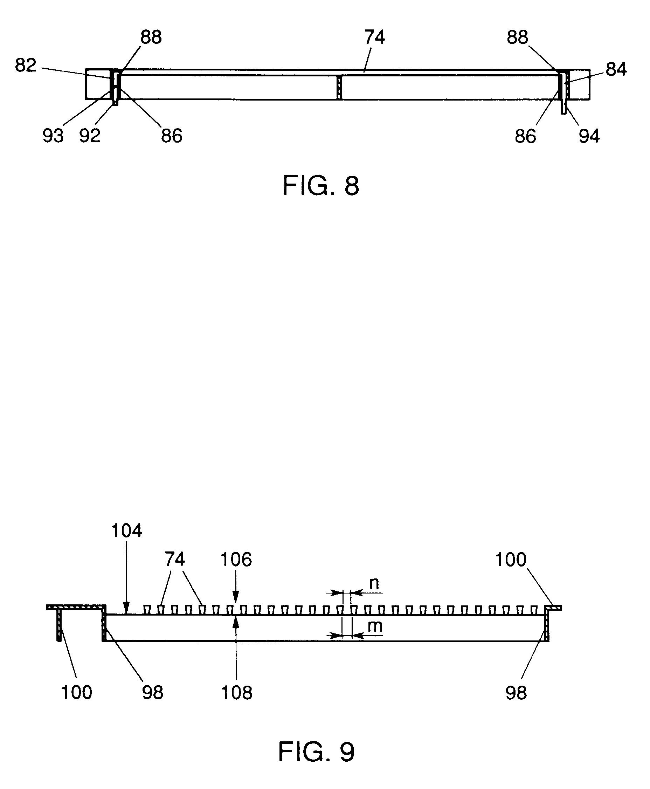

Fig. 11 shows a cross section of a particular further elaboration of the first tubular section 82 according to Figs. 7 and 8. The first tubular section 82 comprises a U-shaped distributor piece 81, shown in top plan view in Fig. 12, which extends in the longitudinal direction of the first tubular section and in an interior space thereof. The U-shaped distributor piece 81 comprises a partition 83, likewise extending in the longitudinal direction of the first tubular section, which subdivides an interior space of the first tubular section into a first subspace 85 and a second subspace 87. The inlet opening 92 opens into the first subspace 85. Further, the interior spaces of the hollow floor sections 74 open via the opening 88 into the second subspace 87. The partition 83 comprises a number of orifices 89, which join the first and second subspace. What is effected by the orifices is that the magnitude of the liquid flow through at least a first floor section is less than the magnitude of the liquid flow of at least a second floor section, the first floor section being located closer to the inlet opening 92 than the second floor section. More particularly, the magnitude of the liquid flow through a floor section will increase according as the floor section is further removed from inlet opening 92. The reason for this is that the temperature of the liquid in the first tubular section 82 will decrease according as the distance to the inlet opening 92 is greater. This will also mean that the temperature of a floor section will be lower according as the floor section in question is further removed from the inlet opening 92. To compensate this undesired effect, the magnitude of the liquid flow through floor sections is increased according as the relevant floor sections are further removed from inlet opening 92. The result is that all floor sections will acquire approximately the same temperature.

As shown diagrammatically in Fig. 7, this can for instance be achieved by increasing the size of the orifices 89 in a direction away from the inlet opening 92. In other words, the size of at least one first orifice 89' is less than the size of at least one orifice 89'', the first orifice 89' being located closer to the inlet opening 92 than the second orifice 89''. In that case the orifices may for instance be uniformly spaced in the longitudinal direction of the first tubular section. Of course, it is also possible for the passage area of all orifices to be the same, with the distance between the adjacent orifices varying. In that case the distance between a first set of adjacent orifices will be less than the distance between a second set of adjacent orifices, the second set of adjacent orifices being located closer to inlet opening 92 than the first set of adjacent orifices.

As can be seen in Figs. 7 and 9, the free ends 98 of the tubular sections 82, 84 are connected with transverse sections 100 which extend parallel to the floor sections 74. As shown best in Fig. 7, the floor sections 74 in combination form a rectangular surface whose width b is less than the corresponding largest width B of the dung grid and whose length l is less than the corresponding largest length L of the dung grid. The consequence in the present exemplary embodiment is that the dung grid comprises on three longitudinal sides thereof an opening 102 extending along these sides, hatched in the drawing. In particular, a gap 104 is present between one of the two transverse sections 100 and the floor section most proximal to this transverse section. It holds for each dung grid 12 that the transverse section 100, which adjoins the gap 104, abuts at least substantially against the shed wall 16. This means that the floor sections 74 of each dung grid 12 extend in the longitudinal direction of the above-mentioned opening in the floor. In other words, the longitudinal direction of the floor sections 74 extends in the longitudinal direction of the conveying apparatus 24. This provides the advantage that when the animals run into a bedding space 14 at high speed because, for instance, a trough mounted on the shed wall 16 in the bedding space is being filled with feed, the animal does not slip in its enthusiasm but can slow down properly to come to a standstill right before the trough to be able to proceed to eat.

In the exemplary embodiment discussed here, the cooler 40 is of a generally known type which, in addition to being capable of cooling air, is also capable of removing water vapour from the air. To the cooler 40 cooling water 71 is supplied, which will be heated by the cooler in that the heat withdrawn from the spent air is given off to the cooling water. Preferably, the abstracted water vapour is supplied via duct 73 to a biobed of the biofilter 38. The heated cooling water comprises energy which in turn can be used elsewhere. This energy is produced in particular by the cattle releasing heat to the accommodation space 3. The heat release of a pig may for instance be 200 watts.

If so desired, the drying and evaporation of, respectively, the solid and liquid excrements during the period when they are disposed on the transport system 20 can be further accelerated by heating these excrements by means of the heating system 48. In this connection, highly advantageous use can be made of the heated cooling water leaving the cooler 40. Preferably, the cooling water which is passed through the cooler 40 is supplied to the dung grids 12 and to the heating system 48. In this example, the cooling water is supplied to the inlets 92 of the dung grids. The dung grids 12 and the heating system 48 are connected in parallel. Via the heating system and the dung grids, the cooling water will give off heat to the surroundings and thereby sustain a temperature decrease. After this cooling water has traversed the heating system 48 and the dung grids 12, it is returned to the cooler 40 to be used again by the cooler for cooling the air 56. The cooling water which has traversed the dung grids 12 is returned via the outlets 94 to the cooler 40. It will be clear that thus a great deal of energy can be saved in that no external energy from outside the shed is required for heating excrements which are located in the discharge path. In particular, the cattle themselves provide the energy for the heating system 48 and the dung grids 12. Moreover, the cooler 40 may even supply a surplus of energy, which can be used for other purposes, both inside and outside the shed.

The dung grid as described above entails a number of particular advantages. Because the upper surface 76 of each floor section is wider than the lower surface 78, the achieved result is that the width m of the gap 106 between two upper surfaces 76 of two adjacent bottom sections 74 is less than the width n of the gap 108 between the lower surfaces 78 of these floor sections. Excrements which are being pressed between the floor sections by the cattle can then easily fall down between the lower surfaces onto the conveying apparatus 24. There is little chance of the excrements sticking between the floor sections. Should it occur that excrements still remain stuck, they will dry up rapidly because the floor sections are heated. As soon as the excrements have dried, they will yet fall down onto the conveying apparatus. It has been found the cattle are in the habit of depositing their excrements near a wall. In this case this means that the cattle are in the habit of depositing the excrements near the partitions 15 or by the shed wall 16. By virtue of the fact that each grid comprises the above-mentioned slots 102, which are located near the partitions 15, excrements deposited near these partitions can fall directly through a slot 102 onto the conveying apparatus 24. Similarly, excrements which the animals deposit in the proximity of the shed wall 16 can fall through the gap 104 directly onto the subjacent transport system 20.

Finally, it is observed that many variants are possible within the framework of the invention. For instance, the floor sections may extend transversely to the longitudinal direction of the transport system 20. Also, a dung grid as shown in Fig. 7 can be extended in the longitudinal direction of the floor sections, in such a manner that a dung grid extends over two adjacent bedding spaces 14.

## Claims

1. A dung grid for the floor of a cattle shed, comprising a number of parallel elongated floor sections, spaced apart with some interspace, which in combination form at least a part of a floor surface of the grid and each comprise an upper surface, a lower surface and two upright side walls, characterized in that the upper surface in a direction transverse to the longitudinal direction of the upper surface is wider than the lower surface.

2. A dung grid according to claim 1, characterized in that the dung grid comprises a number of floor sections each having a cross section whose width decreases in magnitude in the direction from the upper surface to the lower surface.

3. A dung grid according to claim 1 or 2, characterized in that at least one of the two side walls includes a non-right angle with the upper surface and the lower surface.

4. A dung grid according to any one of the preceding claims, characterized in that a cross section of the floor section is trapezoidal.

5. A dung grid according to any one of the preceding claims, characterized in that the dung grid comprises a number of floor sections each having a trapezoidal cross section.

6. A dung grid according to any one of the preceding claims, characterized in that a number of floor sections are of hollow design and each form a transport channel for heating liquid, the grid further comprising an inlet opening for supplying the heating liquid to the dung grid and an outlet opening for discharging the heating liquid which has flowed through said number of floor sections.

7. A dung grid according to claim 6, characterized in that the grid further comprises a first and a second hollow tubular section, through which liquid can flow, each comprising a side wall with openings in which the free open ends of floor sections are disposed, while the first tubular section comprises the inlet opening for supplying heating liquid and the second tubular section comprises the outlet opening for discharging heating liquid which has flowed through floor sections from the first tubular section to the second tubular section.

8. A dung grid according to claim 7, characterized in that the first tubular section comprises an internal partition extending in the longitudinal direction of the first tubular section, which divides an interior space of the tubular section into a first and a second subspace, while the inlet opening opens into the first subspace, the hollow floor sections open into the second subspace, the partition comprises a number of orifices interconnecting the first and second subspaces, the orifices providing that the magnitude of the liquid flow through at least a first floor section is less than the magnitude of the liquid flow of at least a second floor section, the first floor section being located closer to the inlet opening than the second floor section.

9. A dung grid according to claim 8, characterized in that the orifices are uniformly spaced apart in the longitudinal direction of the first tubular section, the size of at least one first orifice being less than the size of at least one second orifice, and the first orifice being located closer to the inlet opening than the second orifice.

10. A dung grid according to any one of claims 7-9, characterized in that the grid comprises two transverse sections between which extend the tubular sections and which extend parallel to the floor sections, the free ends of the tubular sections being connected with the transverse sections.

11. A dung grid according to any one of the preceding claims, characterized in that the floor sections in combination form a rectangular surface whose width is less than a corresponding largest width of the dung grid and whose length is less than a corresponding largest length of the dung grid.

12. A dung grid according to claim 11, characterized in that the dung grid comprises on three longitudinal sides thereof an opening extending along these sides.

13. A dung grid according to claims 7 and 11, characterized in that a slot is present between at least one transverse section and the floor section located most proximal to this transverse section.

14. A cattle shed comprising a floor having at least one opening which is covered with at least one dung grid according to any one of the preceding claims.

15. A cattle shed according to claim 14, characterized in that the opening is rectangular, the floor sections of the dung grid extending in the longitudinal direction of the opening.

16. A cattle shed according to claim 14 or 15, characterized in that the shed further comprises a transport system, which is located under the floor of the shed, while the liquid and solid excrements of the cattle can fall via the slotted openings between adjacent floor sections of the dung grid onto the transport system, the transport system comprising a sloping surface along which liquid excrements flow down to a collecting area on the transport system, so that the liquid and solid excrements are separated from each other.

17. A cattle shed according to any one of claims 14-16, characterized in that the shed further comprises air supply means by means of which an air stream is passed along the excrements on the transport system for drying the excrements.

18. A cattle shed according to any one of claims 14-17, comprising a dung grid according to claim 5, characterized in that the cattle shed further comprises a device by means of which heated water can be supplied to a dung grid for the purpose of heating the dung grid.
